# DEMANDE DE BREVET EUROPEEN

(11) **EP 2 743 843 A1**
(43) Date de publication de la demande: **18.06.2014**
(21) Numéro de dépôt: 13195246.7
(22) Date de dépôt: 02.12.2013
(51) Int. Cl.: G06F 17/30

(54) **Procédé d'extraction configurable de données d'une base de données relationnelle**

(30) Priorité: 11.12.2012 FR 1261907
(71) Demandeur: BULL SAS, 78340 Les Clayes sous Bois (FR)
(72) Inventeur: Ficet, Aline, 91350 Grigny (FR)
(74) Mandataire: Camus, Olivier Jean-Claude

(57) **Abrégé**

L'invention concerne un procédé un procédé d'extraction configurable de données d'une base de données relationnelle à partir d'une ligne de commande, ladite base de données relationnelle comprenant un ensemble de tables et de contraintes, chaque table comportant un ensemble de colonnes comprenant un ensemble de champs, ledit procédé comportant les étapes suivantes :
- Une analyse de la ligne de commande, comportant une détermination de :
■ une clef ;
■ une table ;

- Une lecture d'un fichier de configuration au moyen de la clef déterminée, comportant une identification de colonnes de la table déterminée, lesdites colonnes étant ajoutées à une liste de colonnes ;
- Une génération d'une requête SQL dans la base de données permettant d'extraire au moins des champs des colonnes de ladite liste de colonnes.

## Description

### DOMAINE TECHNIQUE DE L'INVENTION

La présente invention se rapporte au domaine des bases de données, et notamment des bases de données relationnelles.

Plus précisément, l'invention concerne un procédé d'extraction configurable de données d'une base de données relationnelle.

### ARRIERE PLAN TECHNOLOGIQUE DE L'INVENTION

Une base de données relationnelle est un ensemble structuré de données enregistrées sur des supports accessibles par ordinateur via un logiciel appelé système de gestion de base de données. Le système de gestion de base de données permet à des utilisateurs de créer et manipuler la base de données (ajouter des données, supprimer des données, retrouver des données, etc).

Le langage standard de manipulation et restitution des données est le langage SQL (Structured Query Language). La commande SELECT est la commande de base du SQL destinée à extraire des données d'une base.

Pour un utilisateur ne connaissant pas la syntaxe SQL, il existe des logiciels permettant d'extraire des données de bases de données. Cependant ces logiciels ne permettent pas de gérer plusieurs tables lors de l'extraction, d'ajuster les sorties à une sortie prédéfinie ou de conserver les configurations de sorties que l'utilisateur souhaite dans des fichiers pour les réutiliser.

### DESCRIPTION GENERALE DE L'INVENTION

L'invention offre une solution aux problèmes évoqués précédemment, en proposant un procédé d'extraction configurable de données d'une base de données relationnelle à partir d'une ligne de commande qui n'est pas rédigée en langage SQL.

L'invention concerne donc essentiellement un procédé d'extraction configurable de données d'une base de données relationnelle à partir d'une ligne de commande, ladite base de données relationnelle comprenant un ensemble de tables et de contraintes, chaque table comportant un ensemble de colonnes comprenant un ensemble de champs, ledit procédé comportant les étapes suivantes :
- Une analyse de la ligne de commande, comportant une détermination de :
   ■ une clef ;
   ■ une table ;
- Une lecture d'un fichier de configuration au moyen de la clef déterminée, comportant une identification de colonnes de la table déterminée, lesdites colonnes étant ajoutées à une liste de colonnes ;
- Une génération d'une requête SQL dans la base de données permettant d'extraire au moins des champs des colonnes de ladite liste de colonnes.

Grâce au procédé selon l'invention, la sortie est configurable : l'utilisateur indique une clef dans la ligne de commande, qui correspond à un mode d'extraction prédéfini dans le fichier de configuration. Cette clef est utilisée pour déterminer les données à sélectionner. Les données extraites sont ensuite affichées et/ou stockées dans un fichier de stockage.

Le procédé selon l'invention peut présenter une ou plusieurs caractéristiques complémentaires parmi les suivantes, considérées individuellement ou selon toutes les combinaisons techniquement possibles :
- la lecture du fichier de configuration comporte une identification de colonnes d'au moins une deuxième et un ajout desdites colonnes à la liste de colonnes ;
- la lecture du fichier de configuration comporte une identification de labels, et la génération de la requête SQL permet d'associer lesdits labels aux colonnes de la liste de colonnes ;

- l'analyse de la ligne de commande comporte une détermination de la présence ou l'absence d'une spécification de filtre, et en cas de présence d'une spécification de filtre, la génération de la requête SQL permet une extraction selon ladite spécification de filtre ;
- en cas d'absence d'une spécification de filtre, la lecture du fichier de configuration comporte une identification d'une condition de filtrage, et la génération de la requête SQL permet une extraction selon ladite condition de filtrage ;
- l'analyse de la ligne de commande comporte une détermination de la présence ou l'absence d'une spécification de tri, et en cas de présence d'une spécification de tri, la génération de la requête SQL permet un tri des champs à extraire selon la spécification de tri ;
- en cas d'absence de spécification de tri, la lecture du fichier de configuration comporte une identification d'une condition de tri, et la génération de la requête SQL permet un tri des champs à extraire selon la condition de tri ;
- l'analyse de la ligne de commande est réalisée au moyen d'un fichier d'acronymes ;
- l'analyse de la ligne de commande comporte une détermination d'au moins une colonne, ladite au moins une colonne étant ajoutée à la liste de colonnes.

L'invention et ses différentes applications seront mieux comprises à la lecture de la description qui suit et à l'examen des figures qui l'accompagnent.

### BREVE DESCRIPTION DE LA FIGURE

La figure n'est présentée qu'à titre indicatif et nullement limitatif de l'invention. La figure montre un diagramme représentant les étapes d'un procédé selon un mode de réalisation de l'invention.

### DESCRIPTION DETAILLEE D'AU MOINS UN MODE DE REALISATION DE L'INVENTION

Une base de données relationnelle exemple est utilisée dans la suite de la description. La base de données est modélisée par un ensemble de tables et de liens entre lesdites tables. Une table est constituée d'un ensemble de lignes et de colonnes. Une colonne correspond à une catégorie d'informations (une colonne stocke par exemple des numéros de téléphone, une autre stocke des noms...), et une ligne d'une table correspond à un enregistrement, également appelé entrée. L'intersection entre une ligne et une colonne est appelée un champ.

La base exemple comporte notamment deux tables « Personne » et « Voiture » représentées ci-dessous :

**Personne**

| ID_Personne | Nom | Prénom | Age | Voiture_ID |
|---|---|---|---|---|
| 1 | Einstein | Albert | 64 | 4 |
| 2 | Daudet | Alphonse | 64 | 1 |
| 3 | Eiffel | Gustave | 65 | 3 |
| 4 | Ford | Harrison | 59 | 4 |

**Voiture**

| ID_Voiture | Marque |
|---|---|
| 1 | Mercedes |
| 2 | BMW |
| 3 | Renault |
| 4 | Ferrari |

Les tables « Personne » et « Voiture » sont liées.

Le procédé selon l'invention sert à extraire des données de ladite base de données selon un mode d'extraction prédéfini et éventuellement des paramètres donnés par l'utilisateur. Les données extraites sont ensuite affichées et/ou stockées dans un fichier de stockage. Les différents modes d'extraction sont prédéfinis dans un fichier de configuration utilisé lors du déroulement du procédé. Ainsi, le fichier de configuration comporte notamment les informations suivantes :
Pour la table « Personne » :
   - quatre modes d'extraction sont définis : « mode1 », « mode2 », « mode3 », et « tout » ;
   - pour le mode d'extraction « mode1 » :
      o les colonnes à extraire sont « Nom » et « Prénom » ;
      o les colonnes sont associées aux labels respectifs « N. » et « Pr. » ;
      o les colonnes sont ordonnées par rapport à la colonne « Nom » ;
      o les enregistrements sont filtrés selon la condition « Age > 60 » ;
   - pour le mode d'extraction « mode2 » :
      o les colonnes à extraire sont « Nom », « Prénom » et « Age » ;
      o les colonnes sont associées aux labels respectifs « N », « P » et « A » ;
      o les colonnes sont ordonnées par rapport à la colonne « Nom » ;
      o les enregistrements sont filtrés selon la condition « Age = 64 » ;
   - pour le mode d'extraction « mode3 » :
      o les colonnes à extraire sont « Nom », « Prénom », « Age » et « Voiture.Marque », où « Voiture.Marque » est la colonne « Marque » de la table « Voiture » ;
      o les colonnes sont associées aux labels « Noms », « Prénoms », « Ages » et « Voitures » ;
      o les colonnes sont ordonnées par rapport à la colonne « Marque » ;
      o les enregistrements sont filtrés selon la condition « Age > 60 » ;
   - le mode d'extraction « tout » correspond à la succession des modes d'extraction « mode1 » puis « mode2 » puis « mode3 ».

Un exemple d'implémentation d'un tel fichier est donné ci-dessous :
*show.Personne.key.tout=model, mode2, mode3*
*show. Personne.key. mode1=mode1*
*show.Personne.mode1.values=Nom, Prénom*
*show.Personne.mode1.labels=N., Pr.*
*show.Personne.mode1.order=Nom*
*show. Personne.mode1.filter=Age>60*
*show. Personne.key. mode2=mode2*
*show.Personne.mode2.values=Nom, Prénom, Age*
*show.Personne.mode2.labels=N, P, A*
*show. Personne. mode2.order=Nom*
*show. Personne.mode2.filter=Age=60*
*show. Personne.key. mode3=mode3*
*show.Personne.mode3.values=Nom, Prénom, Age, Voiture.Marque*
*show.Personne.mode3.labels=Noms, Prénoms, Ages, Voitures*
*show.Personne.mode3.order=Marque*
*show. Personne.mode3.filter=Age>60*

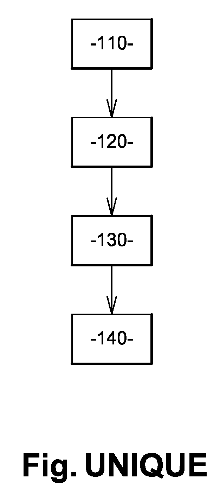

Les étapes d'un mode de réalisation d'un procédé d'extraction configurable de données d'une base de données relationnelle à partir d'une ligne de commande, sont illustrées à la figure 1.

Le procédé selon l'invention est mis en oeuvre par un ordinateur. Ces mises en oeuvre sont réalisées via une implémentation sur un média de stockage non transitoire des codes instructions dont l'interprétation par un microprocesseur de l'ordinateur provoque la réalisation d'étapes dont celles de l'invention.

Le procédé est mis en oeuvre lorsqu'un utilisateur produit une ligne de commande d'invocation de l'invention. La production de la ligne de commande est réalisée en mode console ou en mode intégré via un appel à une interface de programmation. La ligne de commande n'est pas rédigée en langage SQL : la ligne de commande est composée d'une suite de termes à mettre en relation avec un fichier d'acronymes. Le fichier d'acronymes permet d'associer des mots. Un tel fichier comporte une liste d'association. Une association est une chaîne de caractères du type : Mot1 séparateur Mot2. Séparateur est, par exemple, le symbole =. Les formes dérivées d'un même mot sont notamment associées, par exemple le pluriel, le féminin, etc, et les associations sont insensibles à la casse.

Dans l'exemple étudié, la liste d'associations comporte notamment :
*extraire = afficher*
*extraire = show*
*personne = personnes*
*personne = person*
*personne = pers*
*mode1 = basic*
*mode2 = moyen*

### Eta pe 110

L'étape 110 est une étape d'analyse de la ligne de commande utilisateur, de sorte à déterminer des paramètres parmi les suivants :
- une commande indiquant que l'utilisateur souhaite extraire des données de la base de données
- une table à partir de laquelle accéder aux données souhaitées
- une clef correspondant au mode d'extraction souhaité par l'utilisateur, lesdits modes d'extraction étant prédéfinis dans le fichier de configuration
- une spécification de filtre correspondant à un filtrage des enregistrements tel que souhaité par l'utilisateur
- une spécification de tri correspondant à un tri des enregistrements tel que souhaité par l'utilisateur.

La ligne de commande est par exemple rédigée selon le formalisme suivant :
*commande table clef filtre tri*

On note que la présence des termes *table, clef, filtre* et *tri* est optionnelle. Une table, une clef, un filtre et un tri par défaut sont en effet définis dans le fichier de configuration. Ainsi, la détermination des paramètres est non seulement effectuée au moyen de la ligne de commande, mais également si nécessaire au moyen du fichier de configuration. Le ficher de configuration est en effet utilisé si l'un des paramètres parmi la table, la clef, la spécification de filtre et la spécification de tri n'est pas indiqué dans la ligne de commande.

Si l'utilisateur souhaite extraire des données à partir de la table « Personne » en mode d'extraction « mode2 », il produit par exemple la ligne de commande :
*extraire personne mode2*
Par ailleurs, grâce aux associations données par le fichier d'acronymes, l'utilisateur peut également produire les lignes de commande suivantes qui sont interprétées pareillement:
*show person mode2*
*afficher personnes moyen*
etc.

De plus, puisqu'aucune spécification de filtre ou de tri n'a été spécifiée dans la ligne de commande, les colonnes sont ordonnées par rapport à la colonne « Nom » et les enregistrements sont filtrés selon la condition « Age = 64 », comme spécifié dans le fichier de configuration.

L'extraction finale est donc :

| N | P | A |
|---|---|---|
| Daudet | Alphonse | 64 |
| Einstein | Albert | 64 |

Au contraire, si l'utilisateur produit la ligne de commande ;
*extraire personne mode2 Age>60 Prénom*
alors l'analyse de la ligne de commande permet de déterminer que les enregistrements doivent être filtrés selon la condition « Age>60 » et qu'ils doivent être ordonnés par rapport à la colonne « Prénom ».

L'extraction finale est donc :

| N | P | A |
|---|---|---|
| Einstein | Albert | 64 |
| Daudet | Alphonse | 64 |
| Eiffel | Gustave | 65 |

On note que les spécifications de filtre et de tri de la ligne de commande prévalent sur les conditions de filtre et de tri par défaut indiqués dans le fichier de configuration.

### Eta pe 120

L'étape 120 est une étape d'ajouts d'éléments dans une liste de colonnes au départ vide, à partir de la clef et de la table déterminées dans l'étape 110, et du fichier de configuration. Ladite liste de colonnes est remplie des noms des colonnes correspondant au mode d'extraction déterminé. Ces colonnes appartiennent à la table déterminée et éventuellement à au moins une deuxième table.

Par exemple, si la ligne de commande est :
*extraire personne mode2*
alors la liste de colonnes devient [Nom, Prénom, Age].
Dans ce cas, toutes les colonnes appartiennent à la table « Personne ».

Si la ligne de commande est :
*extraire personne mode3*
alors la liste de colonnes devient [Nom, Prénom, Age, Voiture.Marque].
Dans ce cas, les colonnes appartiennent à la table « Personne » et à la table « Voiture ».

Dans un mode de réalisation de l'invention, l'analyse de la ligne de commande de l'étape 110 comporte une détermination d'au moins une colonne à ajouter à la liste des colonnes. Cela permet à l'utilisateur d'ajouter ponctuellement et de manière flexible des données au résultat extrait. Par exemple, si l'utilisateur souhaite extraire des données à partir de la table « Personne » en mode d'extraction « mode2 » et ajouter au résultat des informations de la colonne « Marque », il produit la ligne de commande :
*extraire personne mode2 -Marque*

La liste de colonnes est alors [Nom, Prénom, Age, Marque], et l'extraction finale est :

| N | P | A | Marque |
|---|---|---|---|
| Daudet | Alphonse | 64 | Mercedes |
| Einstein | Albert | 64 | Ferrari |

### Etape 130

L'étape 130 est une étape d'ajouts d'éléments dans une liste de labels au départ vide, à partir de la clef et de la table déterminées dans l'étape 110, et du fichier de configuration. Ladite liste de labels est remplie des labels associés aux colonnes de la liste de colonne précédemment remplie, et définis par la clef.

Par exemple, si la ligne de commande est :
*extraire personne moyen*
alors la liste de labels est [N, P, A].

Si la ligne de commande est :
*extraire personne détaillé*
alors la liste de labels est [Noms, Prénoms, Ages, Voitures].

### Eta pe 140

L'étape 140 est une étape d'écriture d'une requête SELECT de SQL.

La syntaxe d'une commande SELECT est composée de clauses dont certaines sont optionnelles. Un exemple de syntaxe classique est donné ci-dessous :
*SELECT colonne(s) [AS label(s) associés aux colonne(s)]*
*FROM nom(s) de table(s)*
*[WHERE condition(s) de filtrage]*
*[ORDER BY condition de tri]*
Dans cet exemple, chaque ligne correspond à une clause. Les mots clefs du SQL sont en majuscule, les paramètres en minuscule, et les clauses optionnelles sont entre crochets.

La clause SELECT sert à spécifier les colonnes à extraire, la clause FROM sert à spécifier les tables desquelles extraire les colonnes, la clause WHERE sert à spécifier un filtre, c'est-à-dire des conditions à remplir pour que les lignes soient présentes dans le résultat, et la clause ORDER BY sert à spécifier une condition de tri des données du résultat. Quant à l'opérateur AS, il sert à donner un nom aux colonnes créées par le résultat.

La requête SELECT générée dans l'étape 140 permet d'extraire de la base de données :
- les données appartenant aux colonnes de la liste de colonnes (clause SELECT)
- les colonnes étant associées aux labels identifiés dans la liste de labels (opérateur AS)
- répondant à la spécification de filtre déterminée dans la ligne de commande, ou si la ligne de commande ne comprend pas de spécification de filtre, répondant à la condition de filtre identifiée dans le fichier de configuration (clause WHERE)
- ordonnées selon la spécification de tri déterminée dans la ligne de commande, ou si la ligne de commande ne comprend pas de spécification de tri, répondant à la condition de tri identifiée dans le fichier de configuration (clause ORDER BY).

La requête SQL est par exemple écrite grâce à un générateur automatique de requêtes SQL.

## Revendications

1. Procédé d'extraction configurable de données d'une base de données relationnelle à partir d'une ligne de commande, ladite base de données relationnelle comprenant un ensemble de tables et de contraintes, chaque table comportant un ensemble de colonnes comprenant un ensemble de champs, ledit procédé comportant les étapes suivantes :
- Une analyse de la ligne de commande, comportant une détermination de :
■ une clef ;
■ une table ;
- Une lecture d'un fichier de configuration au moyen de la clef déterminée, comportant une identification de colonnes de la table déterminée, lesdites colonnes étant ajoutées à une liste de colonnes ;
- Une génération d'une requête SQL dans la base de données permettant d'extraire au moins des champs des colonnes de ladite liste de colonnes.

2. Procédé selon la revendication précédente, **caractérisé en ce que** la lecture du fichier de configuration comporte une identification de colonnes d'au moins une deuxième table, et un ajout desdites colonnes à la liste de colonnes.

3. Procédé selon l'une des revendications précédentes, **caractérisé en ce que** la lecture du fichier de configuration comporte une identification de labels, et la génération de la requête SQL permet d'associer lesdits labels aux colonnes de la liste de colonnes.

4. Procédé selon l'une des revendications précédentes, **caractérisé en ce que** :
- l'analyse de la ligne de commande comporte une détermination de la présence ou l'absence d'une spécification de filtre, et
- en cas de présence d'une spécification de filtre, la génération de la requête SQL permet une extraction selon ladite spécification de filtre.

5. Procédé selon la revendication précédente, **caractérisé en ce que**, en cas d'absence d'une spécification de filtre :
- la lecture du fichier de configuration comporte une identification d'une condition de filtrage, et
- la génération de la requête SQL permet une extraction selon ladite condition de filtrage.

6. Procédé selon l'une des revendications précédentes, **caractérisé en ce que** :
- l'analyse de la ligne de commande comporte une détermination de la présence ou l'absence d'une spécification de tri, et
- en cas de présence d'une spécification de tri, la génération de la requête SQL permet un tri des champs à extraire selon la spécification de tri.

7. Procédé selon la revendication précédente, **caractérisé en ce que**, en cas d'absence de spécification de tri :
- la lecture du fichier de configuration comporte une identification d'une condition de tri, et
- la génération de la requête SQL permet un tri des champs à extraire selon la condition de tri.

8. Procédé selon l'une des revendications précédentes, **caractérisé en ce que** l'analyse de la ligne de commande est réalisée au moyen d'un fichier d'acronymes.

9. Procédé selon l'une des revendications précédentes, **caractérisé en ce que** l'analyse de la ligne de commande comporte une détermination d'au moins une colonne, ladite au moins une colonne étant ajoutée à la liste de colonnes.
